Europäisches Patentamt

European Patent Office

Office européen des brevets

(11) Numéro de publication: **0 225 584**
**A2**

(12) # DEMANDE DE BREVET EUROPEEN

(21) Numéro de dépôt: **86116711.2**

(51) Int. Cl.⁴: **G 01 N 17/00**

(22) Date de dépôt: **02.12.86**

(30) Priorité: **03.12.85 FR 8517880**

(43) Date de publication de la demande: **16.06.87**
**Bulletin 87/25**

(84) Etats contractants désignés: **AT DE ES FR GB**

(71) Demandeur: **DETALLE, Pol, 11 Rue Edouard Herriot,**
**F-54600 Villers-les-Nancy (FR)**
Demandeur: **DETALLE, Richard, 11 Rue Edouard Herriot,**
**F-54600 Villers-les-Nancy (FR)**

(72) Inventeur: **DETALLE, Pol, 11 Rue Edouard Herriot,**
**F-54600 Villers-les-Nancy (FR)**
Inventeur: **DETALLE, Richard, 11 Rue Edouard Herriot,**
**F-54600 Villers-les-Nancy (FR)**

(74) Mandataire: **Casalonga, Axel et al, BUREAU D.A.**
**CASALONGA - JOSSE Morassistrasse 8,**
**D-8000 Munich 5 (DE)**

(54) Dispositif de détection de l'usure de briques d'insufflation de fluides dans des métaux liquides.

(57) Le dispositif de détection comprend au moins deux éléments conducteurs électriques (2, 4) disposés à l'extérieur de la brique réfractaire (1), l'un (4) au moins des deux éléments conducteurs s'étendant, depuis le côté arrière de la brique, jusqu'à une distance prédéterminée du côté avant, en contact avec le métal liquide, et les deux éléments conducteurs étant montés dans un circuit détecteur électrique (8, 9), de manière que lorsque l'usure de la brique (1) atteint l'extrémité de l'élément conducteur (4), la mise en contact des deux éléments conducteurs (2, 4) par le métal liquide soit décelable sur l'appareil indicateur (9).

Dispositif de détection de l'usure de briques d'insufflation de fluides dans des métaux liquides.

La présente invention se rapporte à un dispositif de
contrôle de l'usure de briques d'insufflation de fluides
dans des métaux liquides, notamment pour introduire des
gaz, des liquides ou des poudres dans de l'acier en fusion.

A divers stades de l'élaboration des métaux, en particulier de l'acier, le métallurgiste est amené fréquemment
à introduire un gaz neutre ou réactif, par exemple pour
éviter la solidification totale ou partielle de la masse
en fusion, provoquer ou faciliter des réactions chimiques,
éviter l'obstruction des canaux de coulée, ou obtenir un
réchauffement total ou partiel de la masse ne fusion, ou
pour tout autre dessein.

Dans ce but, on utilise généralement une pièce réfractaire dite brique ou tuyère d'insufflation, placée dans le
fond ou la paroi de l'appareil métallurgique qui peut
être, par exemple, un four, une poche intermédiaire, une
poche d'affinage, un répartiteur, un système de fermeture,
des canaux de coulée, d'évacuation, de solidfication, etc..
Cette pièce réfractaire est en contact avec le métal liquide
et s'use plus ou moins rapidement.

Il est important pour l'opérateur de connaître le degré
d'usure atteint par la brique d'insufflation, de façon
à éviter qu'en cas d'usure totale de la brique, le métal
ne jaillisse en dehors de l'appareil, en créant de graves
dangers pour les opérateurs et les installations environnates.

Divers procédés ont été mis au point pour contrôler
l'usure d'une telle brique d'insufflation, mais ils présentent
tous l'inconvénient d'agir au moyen de dispositifs placés
à l'intérieur de la brique, ce qui présente de nombreux
inconvénients pour la fabrication de celle-ci.

Le but de la présente invention est de mettre au point un dispositif permettant de détecter l'usure d'une brique d'insufflation sans que la fabrication de cette dernière ne soit sensiblement affectée par la présence de ce dispositif.

Suivant l'invention, ce résultat est obtenu à l'aide d'un dispositif de détection d'usure de briques d'insufflation comprenant un premier et un second éléments conducteurs électriques placés à l'extérieur de la brique, isolés électriquement l'un de l'autre et s'étendant depuis le côté arrière de la brique vers le côté avant de la brique, en contact avec le métal liquide. Au moins un premier des deux éléments conducteurs électriques se termine à une distance du côté avant de la brique correspondant à un degré d'usure à détecter, alors que le second des deux éléments conducteurs électriques peut s'étendre plus loin en direction du côté avant de la brique. Les deux éléments conducteurs électriques sont reliés à l'arrière de la brique à un dispositif indicateur électrique en série avec une source de courant.

Grâce à la disposition des éléments conducteurs électriques à l'extérieur de la brique d'insufflation, la fabrication de la brique d'insufflation proprement dite, en matériau réfractaire, n'est pas affectée par la présence des éléments conducteurs électriques qui sont rapportés après fabrication de la brique proprement dite. Néanmoins, lorsque l'usure de la brique atteint un degré prédéterminé par la distance séparant le premier élément conducteur électrique du côté avant de la brique, les deux éléments conducteurs électriques sont mis en contact l'un avec l'autre par le métal liquide conducteur, de sorte que le dispositif indicateur se trouve déclenché.

Le dispositif indicateur peut être un dispositif d'émission d'un signal quelconque, par exemple une lampe, une sirène, un galvanomètre, un indicateur numérique etc.. Notamment en cas d'utilisation d'un galvanomètre qui, en série avec la source de courant électrique, constitue un ohmmètre indiquant la résistance électrique entre les deux éléments conducteurs, il est avantageux de monter une résistance électrique de valeur prédéterminée entre les deux éléments conducteurs électriques, directement en arrière de la brique.

Grâce à ce montage, tant que la brique n'est pas usée jusqu'au degré déterminé par le permier élément conducteur électrique, le galvanomètre indique la valeur de cette résistance dite de tarage. Cette lecture garantit le bon état de l'ensemble du circuit parcouru par le courant. En effet, toute rupture ou mauvais contact se traduit, sur le galvanomètre, par l'indication d'une résistance très élevée ou infinie. Lorsque, par contre, l'usure de la brique amène le métal en fusion en contact avec les deux éléments conducteurs électriques, la résistance de tarage se trouve court-circuitée et le galvanomètre indique une résistance nulle qui correspond à une usure prédéterminée de la brique d'insufflation.

Dans l'état actuel de la technique, les briques d'insufflation en matériau réfractaire perméable comportent généralement une enveloppe métallique qui les entoure sur leur face latérale et sur le côté arrière, et un tuyau d'amenée de fluide raccordé à l'arrière à cette enveloppe pour déboucher dans la brique. Suivant un mode de réalisation préféré de l'invention, cette enveloppe métallique constitue le second des deux éléments conducteurs électriques et le premier élément conducteur électrique est constitué par une autre enveloppe métallique entourant la première enveloppe, depuis le côté arrière jusqu'à distance du côté avant, en étant isolée électriquement de la première enveloppe. Il suffit donc, dans ce cas, de rapporter une enveloppe partielle sur une brique d'insufflation déjà munie d'une enveloppe complète, pour constituer une brique d'insufflation équipée d'un dispositif de détection d'usure.

Si l'on veut détecter plus d'un degré d'usure de la brique, le dispositif de détection comprend, en plus d'un premier et d'un second éléments conducteurs électriques, au moins un troisième élément conducteur se terminant à une distance du côté avant de la brique plus faible que le premier élément conducteur, cette distance correspondant à un second degré d'usure à détecter. Pour pouvoir, dans ce cas, indiquer les différents degrés d'usure sur un même appareil par exemple un galvanomètre en série avec une source de courant, il est avantageux de monter tous les éléments conducteurs électriques dans un même circuit comprenant un galvanomètre et une source de courant, en intercalant une résistance électrique de valeur prédéterminée entre chaque fois deux éléments conducteurs.

Ainsi, tant que le premier degré d'usure n'est pas atteint, le galvanomètre indique la valeur de toutes les résistances intercalées entre les éléments conducteurs. Lorsque le premier degré d'usure est atteint, le métal liquide court-circuite la résistance intercalée entre le premier et le second éléments conducteurs, ce qui modifie l'indication donnée par le galvanomètre. Lorsque le second degré d'usure est atteint, la résistance intercalée entre le second et le troisième élément conducteur est également court-circuitée.

Le nombre de degrés d'usure à détecter peut bien entendu être supérieur à deux, par utilisation d'un nombre d'éléments conducteurs électriques plus élevé.

En se référant aux dessins annexés, on va décrire ci-après plus en détail deux modes de réalisation illustratifs et non limitatifs de l'objet de l'invention ; sur les dessins :

- la figure 1 est une coupe schématique d'un mode de réalisation d'un dispositif de détection d'un degré d'usure ;
- la figure 2 est une vue schématique d'un dispositif de détection de trois degrés d'usure.

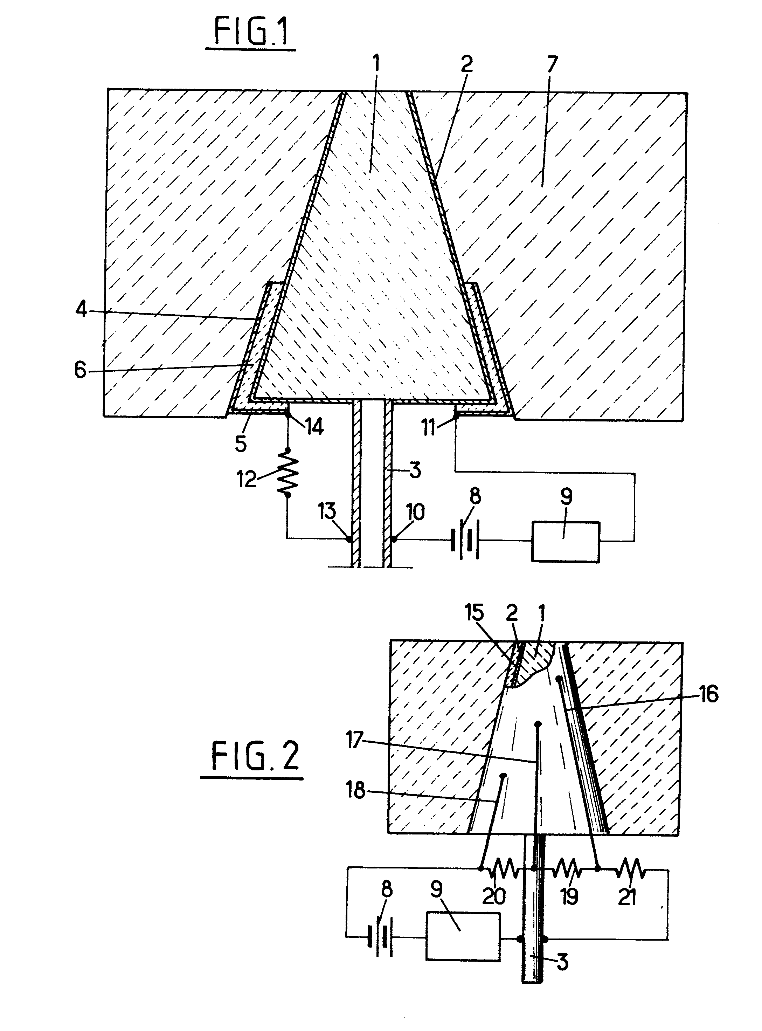

Selon la figure 1, une brique d'insufflation 1 perméable au gaz à insuffler, de forme tronconique, est entourée de façon usuelle sur sa surface latérale ainsi que sur sa grande base d'une enveloppe de tôle 2. Un tuyau métallique 3 d'amenée de gaz est raccordé de façon étanche à l'enveloppe 2, sensiblement au milieu de la grande base de la brique 1. La petite base de la brique 1 est libre.

Depuis sa grande base, l'enveloppe 2 est entourée à distance, sur une partie de la hauteur, par une enveloppe métallique 4 partielle, également de forme tronconique, comportant à sa grande base un rabat intérieur 5. Les deux enveloppes 2 et 4 sont séparées l'une de l'autre par un isolant électrique 6 réfractaire.

L'ensemble de la brique d'insufflation ainsi constitué est incorporé à un support 7 qui est également constitué par une brique réfractaire.

La brique d'insufflation 1 avec son support 7 est destinée à être montée dans le fond ou la paroi d'un appareil métallurgique de manière que le côté avant de la brique 1 correspondant à la petite base de cette dernière se trouve en contact avec le métal liquide contenu dans l'appareil.

Les deux enveloppes métalliques 2 et 4 sont montées dans un circuit électrique de détection comprenant une source de courant 8 et un appareil indicateur 9, par exemple un galvanomètre, montés en série. A cet effet, une borne de la source de courant 8 est reliée par l'intermédiaire d'un conducteur à l'aide d'une soudure 10 au tuyau d'amenée de gaz 3 lui-même relié à l'enveloppe 2, tandis qu'une borne de l'appareil indicateur 9 est reliée par un conducteur et une soudure 11 à l'enveloppe 4, la source 8 et l'appareil 9 étant relié l'un à l'autre par leurs autres bornes.

Par ailleurs, une résistance 12 de tarage est montée entre les deux enveloppes 2 et 4, cette résistance étant également reliée par une soudure 13 au tuyau 3 et par une soudure 14 à l'enveloppe 4.

Les deux enveloppes 2 et 4 constituent ainsi deux électrode de détection de l'usure de la brique 1. En effet, tant que la brique 1 n'est pas usée jusqu'à l'enveloppe 4, les deux enveloppes 2 et 4 ne se trouvent pas en contact électrique l'une avec l'autre, et le galvanomètre 9 donne une indication qui correspond à la valeur de la résistance de tarage 12.

L'enveloppe 2 fond, au fur et à mesure que l'usure de la brique 1 progresse. Lorsque l'usure de la brique 1 atteint l'extrémité supérieure de l'enveloppe 4, le métal liquide entre en contact avec les deux enveloppes 2, 4 et court-circuite ainsi la résistance 12, de sorte que la résistance du circuit devient nulle, ce qui est décelé par l'appareil 9. Ce dernier donne ainsi une indication correspondant à une usure prédéterminée de la brique d'insufflation 1.

La figure 2 représente schématiquement une brique d'insufflation avec un dispositif de détection de trois degrés d'usure.

Dans ce cas, l'enveloppe 2 qui entoure la brique réfractaire 1 sur toute la hauteur, comme sur la figure 1, et qui comporte à la grande base un tuyau d'arrivée de gaz 3, est entourée sur toute sa hauteur d'une couche d'isolant électrique 15 réfractaire. Sur cette couche d'isolant 15 sont rapportés extérieurement trois éléments conducteurs électriques 16, 17, 18 répartis sur la périphérie et s'étendant depuis le côté arrière de la brique jusqu'à des distances différentes du côté avant de cette dernière, l'élément 16 étant le plus long et l'élément 18 le plus court.

Les trois éléments conducteurs 16, 17, 18 métalliques sont, à l'arrière de la brique, reliés entre eux par l'intermédiaire d'une résistance 19 intercalée entre les éléments conducteurs 16 et 17 et d'une résistance 20 intercalée entre les éléments conducteurs 17 et 18. L'élément conducteur 18 est par ailleurs relié à une borne d'un montage en série d'une source de courant 8 et d'un appareil indicateur 9, tel qu'un galvanomètre, dont l'autre borne est reliée au tuyau d'amenée de gaz 3. L'élément conducteur 16 est de son côté relié au tuyau d'amenée de gaz 3 par l'intermédiaire d'une résistance 21 qui se trouve ainsi intercalée entre l'enveloppe 2 et l'élément conducteur 16.

En fonctionnement, tant que l'usure de la brique 1 n'a pas atteint l'extrémité avant de l'élément conducteur 16 le plus long, l'appareil 9 donne une indication qui correspond aux trois résistances 19, 20 et 21 en série.

Lorsque l'usure de la brique 1 a atteint l'extrémité de l'élément conducteur 16, le métal liquide met en contact l'élément 16 avec l'enveloppe 2, ce qui court-circuite la résistance 21. L'appareil 9 donne alors une indication correspondant à un premier degré d'usure.

Lorsque l'usure de la brique 1 atteint l'extrémité avant de l'élément conducteur 17, le métal liquide établit également le contact entre l'élément 17 et l'élément 16, de sorte que la résistance 19 se trouve également court-circuitées et que l'appareil 9 donne une indication correspondant à un second degré d'usure.

Lorsque l'usure de la brique 1 atteint l'extrémité avant de l'élément conducteur 18, le métal liquide établit également le contact entre l'élément 18 et l'élément 17, court-circuitant ainsi également la résistance 20. La résistance du circuit est alors nulle et l'indication que donne l'appareil 9 correspond à un troisième degré d'usure.

Il y a lieu de noter que les modes de réalisation décrits ci-dessus et illustrés par les dessins annexés n'ont été donnés qu'à titre illustratif et non limitatif et que de nombreuses modifications et variantes sont possibles dans le cadre de l'invention.

Ainsi, l'invention est applicable également à des briques d'insufflation qui ne sont pas entourées par une enveloppe métallique (2), auquel cas il suffit de rapporter, sur la surface latérale de la brique réfractaire, deux ou plus de deux éléments conducteurs isolés électriquement les uns des autres et branchés dans un circuit électrique de détection de résistance analogue à ceux décrits.

Par ailleurs, au lieu d'utiliser un appareil indicateur tel qu'un galvanomètre 9, il est également possible d'utiliser des appareils d'émission de signaux, par exemple lumineux (lampes), acoustiques (sirènes), des indicateurs numériques ou tous autres appareils appropriés de contrôle et/ou d'alerte.

REVENDICATIONS

1. Dispositif de détection de l'usure de briques d'insufflation de fluides dans des métaux liquides, caractérisé par le fait qu'il comprend un premier et un second éléments conducteurs électriques (2, 4 ; 2, 16, 17, 18) placés à l'extérieur de la brique (1), isolés électriquement l'un de l'autre et s'étendant depuis le côté arrière de la brique vers le côté avant de la brique, en contact avec le métal liquide, qu'un premier (4 ; 16, 17, 18) des deux éléments conducteurs électriques se termine à une distance du côté avant de la brique correspondant à un degré d'usure à détecter, alors que le second (2) des deux éléments conducteurs électriques peut s'étendre plus loin en direction du côté avant de la brique, et que les deux éléments conducteurs électriques sont reliés à l'arrière de la brique à un dispositif indicateur électrique (9) en série avec une source de courant (8).

2. Dispositif suivant la revendication 1, caractérisé par le fait qu'il comprend une résistance électrique (12) de valeur prédéterminée entre les deux éléments conducteurs électriques (2, 4).

3. Dispositif suivant la revendication 1 ou 2, caractérisé par le fait que le second des deux éléments conducteurs électriques est consitué par une enveloppe métallique (2) entourant la brique (1) depuis le côté arrière jusqu'au côté avant et que le premier élément conducteur électrique est constitué par une autre enveloppe métallique (4) entourant la première enveloppe depuis le côté arrière jusqu'à distance du côté avant, en étant isolée électriquement de la première enveloppe.

4. Dispositif suivant la revendication 1 ou 2, caractérisé par le fait qu'il comprend, en plus d'un premier (16) et d'un second (2) éléments conducteurs électriques, au moins un troisième élement conducteur (17, 18) se terminant à une distance du côté avant de la brique plus faible que le premier élément conducteur (16), que tous les éléments conducteurs électriques sont montés dans un même circuit comprenant en série une source de courant et un appareil
indicateur, et qu'une résistance électrique (19, 20, 21)
de valeur prédéterminée est intercalée entre chaque fois
deux éléments conducteurs.

FIG.1

FIG.2